# EUROPEAN PATENT APPLICATION

(11) **EP 4 488 175 A1**
(43) Date of publication of application: **08.01.2025**
(21) Application number: 23184144.6
(22) Date of filing: 07.07.2023
(51) Int. Cl.: B64D 11/02

(54) **AIRCRAFT WITH A POTABLE WATER SYSTEM AND INSTALLATION METHOD**

(71) Applicant: Airbus Operations GmbH, 21129 Hamburg (DE)
(72) Inventor: Albers, Frederik, 21129 Hamburg (DE); Hegenbart, Matthias, 21129 Hamburg (DE); Boenning, Kenneth, 21129 Hamburg (DE); Zimmermann, Axel, 21129 Hamburg (DE); Peyres, Brice, 21129 Hamburg (DE); Pawellek, Sonja, 21129 Hamburg (DE); Ohlfest, Carsten, 21129 Hamburg (DE); Wenderoth, Stefan, 21129 Hamburg (DE); Schneider, Frank, 21129 Hamburg (DE)

(57) **Abstract**

Disclosed is an Aircraft with a potable water system adapted to feed potable water from a potable water tank to a consumer equipment of a monument in the aircraft cabin, comprising several potable water interfaces, and at least one monument, wherein in the monument at least one opening is provided adapted to establish a fluid connection to the consumer equipment, wherein at least one potable water interface is accessible through the at least one opening, and an assembly method for installing a potable water system wherein standard parts of the potable water system are preinstalled and customized parts are installed later on.

## Description

The present invention refers to an aircraft having a potable water system and to a method for installing a potable water system in an aircraft.

In general, an aircraft provides different locations for monuments such as galleys and lavatory modules. In a so-called standard location, the monuments are installed as standard in each aircraft of this type. In a so-called binary location, the monument locations are fixed, but customer can select or deselect installation of monuments. For instance, seats can be installed in these locations, if no monuments are requested by the costumer. In a so-called flex zone, the amount, the type and the locations of monuments can be chosen individually by the customer.

In order to supply fresh water to a consumer equipment such as a washbasin in the monuments, a potable water system is provided. The potable water system is adapted to feed potable water from a potable water tank to the consumer equipment. In order to fulfil individual consumer needs, the piping of the potable water systems is technically expensive. In addition, the piping restricts the individual positioning of the monuments.

It is an object of the present invention to provide an aircraft with an improved potable water system enabling a flexible installation of monuments in the aircraft cabin, and a simplified assembly method of a potable water system.

The object is achieved by an aircraft with the features of claim 1 and by a method with the features of claim 10. Advantageous embodiments are disclosed in the dependent claims, the description and the figures.

According to the invention, an aircraft has a potable water system which is adapted to feed potable water from a potable water tank to a consumer equipment of a monument in the aircraft cabin. The potable water system comprises several potable water interfaces, and at least one monument. The potable water interfaces are provided in a cabin floor section and are in fluid connection with the potable water tank. The monument has a floor section with at least one opening. The opening is adapted to establish a fluid connection to the consumer equipment of the monument. At least one potable water interface is accessible through the at least one opening. Alternatively, the potable water interfaces are located in a monument floor section and the openings are located in a cabin floor section.

According to an inventive method for installing a potable water system in an aircraft to feed potable water from a potable water tank to a consumer equipment of a monument in the aircraft cabin, in potable water interfaces are installed at the defined locations in a cabin floor section. In a monument floor section, openings are provided adapted to establish a fluid connection to the consumer equipment of the monument. After that, the monument is installed in the aircraft cabin. The consumer equipment is connected to the accessible potable water interfaces via a potable water monument line and needed potable water interfaces are connected to the potable water main line.

Alternatively, the openings are provided in the cabin floor and the potable interfaces are located in a monument floor. The potable water interfaces are installed at defined locations in a monument floor section. Then, openings are provided in a cabin floor section adapted to establish a fluid connection to the consumer equipment of the monument. After that, the monuments are installed in the aircraft cabin. Then, consumer equipment is connected to the accessible potable water interfaces via a potable water monument line and needed potable interface are connected to the potable water main line.

It should be noted that in both embodiments, the connecting of the at least one needed potable interface to the potable water main line can be done before the monuments are installed in the cabin.

The invention enables the combination of preinstalled potable water interfaces (provided at predefined positions in the aircraft) with customized piping (potable water monument lines). Basically, the invention can be used in the standard locations, the binary locations as well in the flex zone. The potable water system can be a high-pressure system having a working pressure more than 5bar. The potable water interfaces are of the quick connect type (quick disconnect type, such as connecting a potable water monument line is easy. The monument lines as well as all other lines of the potable water system can be pipes, hoses, tubes, etc..

Preferably, each cabin floor panel in a monument cabin location of the aircraft cabin is equipped with at least one potable water interface. By means of this, the floor panels can have the same design and same manufacturing steps. A preferred monument cabin area is the flex zone.

In one embodiment, the at least one opening has a circular shape, similar or identical to a through bore. Such shape is easy to create.

Alternatively, the at least opening has an elongated shape. By means of this, more than one potable water interfaces are accessible by only one opening.

Preferably, several openings are provided in the monument floor such that the monument can be installed in different axial and/or transversal directions, whereas access to at least one potable water interface is given.

Advantageously, the potable water interfaces as well as the openings are provided in a distance to an adjacent potable water interface and an adjacent opening, respectively, that correspondence to an axial displacement of passenger seats. By this measure, the monument can be moved flexible in longitudinal direction along seat rails. For instance, if the seat rail has an inch-grid, then adjacent openings and adjacent potable water interfaces are also spaced apart from each other in a distance of one inch (25,4mm).

The assembly of the monument is simplified, if the potable interfaces are located in an axial row. Then, each interface can be connected via the same branch line to a longitudinal potable water main line.

In order to create a smooth monument floor, not used openings are closed by a plug.

Advantageously, the potable water system, at least one potable water main line and several water branch lines are provided. The at least one potable water main line and the potable water branch lines are adapted to feed potable water stored in the potable water tank to several potable water interfaces. The at least one potable water main line is routed in longitudinal direction from the potable water tank and positioned in a warm area of the aircraft below the cabin floor having an ambient temperature preventing icing of the potable water. It is important that the temperature in the warm area does not fall below freezing level during all operational scenarios (cruise flight of different length, climb, descend, cold weather turnaround also with some doors open etc.). If these criteria are met, the water main line route is the right one. This is mostly the case if a certain distance to the cold a/c skin or other structural elements which could be very cold is maintained. One example of an area meeting these criteria is a central area of the aircraft. However, it is not necessarily in the center of the fuselage cross section. It is possible that this cannot be achieved via a straight routing and a more complex pipe route comprising bends etc..

The potable water branch lines extend from the at least one potable water main line to those potable water interface which are needed for the monument installation (selected interfaces). Due to this measure, a freezing of the potable water system is avoided as all lines are positioned in warm regions of the aircraft. As a result, ice protection equipment for the potable water lines can be omitted by design. That will reduce the complexity and weight of the potable water system significantly. Depending on the routing of the potable water main line and the position of an activated potable water interface, the branch lines can extend in transversal direction, in a diagonal direction or just in a vertical direction. For instance, ff the main water line is positioned in the middle of the aircraft, the potable water line also extends in transversal direction. If the main potable water line is positioned laterally, it can be positioned directly below the at least one potable water interface, so that there is (basically) only a vertical extension of the potable water branch line.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Fig. 1:: a cabin layout with an exemplary inventive potable water system;
- Fig. 2:: a top view of monument floor of an inventive monument,
- Fig. 3:: the installation of the monument shown in figure 2 in an inventive monument location area of the fuselage.

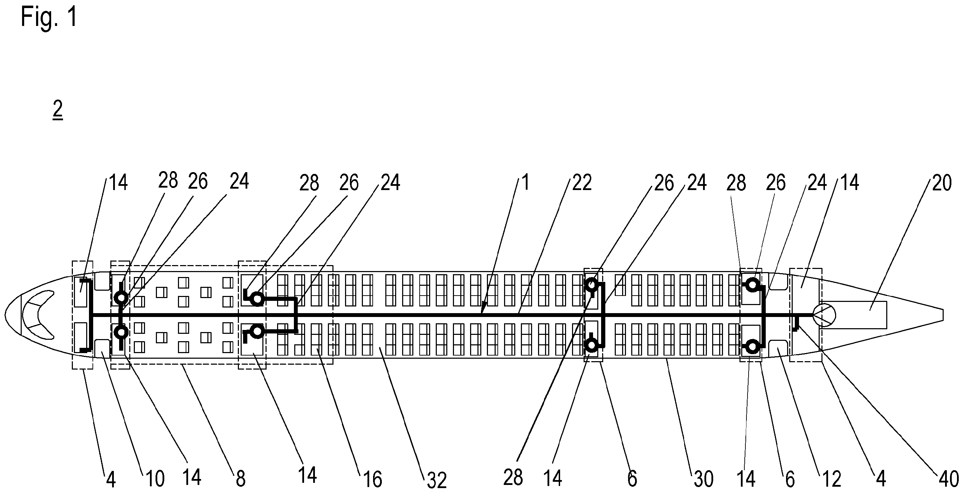

In Figure 1 a cabin layout of a single aisle passenger aircraft and an inventive potable water (distribution) system 1 are shown. Here, the cabin 2 has three different types of monument locations - the standard locations 4, the binary locations 6 and the flex zone 8. The standard locations 4 are in front of a first cabin door 10 in the forward fuselage and behind a last cabin door 12 in the aft fuselage. The location of the monuments 14 such as galleys and lavatories are fixed, the type of monuments 14 can vary depending on the costumer's needs.

In the binary locations 6, the monument locations are fixed, but a customer can select or deselect an installation. For instance, seats 16 can be installed in these locations, if no monuments are requested by the costumer.

In the flex zone 8, the amount, the type and the locations of monuments 14 can be chosen individually by the customer. The customer can choose an individual position of the monuments at least in longitudinal direction (for example in a one-inch spacing) of the aircraft. In the shown example, the flex zone 8 is in the forward area of the cabin 2 between the first door 10 and a not shown centre wing box.

In the shown embodiment, the potable water system 1 comprises a potable water tank (tank) 20 and a water distribution network (piping). Potable water is stored in the tank 20 in the aft fuselage and is distributed to the cabin monuments 14 by means of the water distribution network. However, a plurality of tanks 20 can also be provided which are positioned in different positions in the aircraft, for instance in a forward section or in a mid-section. This network comprises at least one potable water main line 22 (main line), several potable water branch lines 24 (branch lines), several potable water interfaces 26 (interfaces) and several potable water monument lines 28(monument lines).

The main line 22 extends in longitudinal direction of the aircraft. It is connected with the tank 20 and routed in sufficient distance to the aircraft skin 30 or to other cold zones so that ice protection equipment is not required. For instance, the main line 22 is positioned in a centre area of the fuselage below a cabin floor 32.

By means of the branch lines 24, the potable water is distributed to the interfaces 26. The branch lines 24 extend in transversal direction and in vertical direction below the cabin floor 32 and each branch line 24 is in fluid connection with a selected potable water interface 26. However, if the interface 26 is positioned vertically above the main line 22, the branch line 24 has only a vertically component.

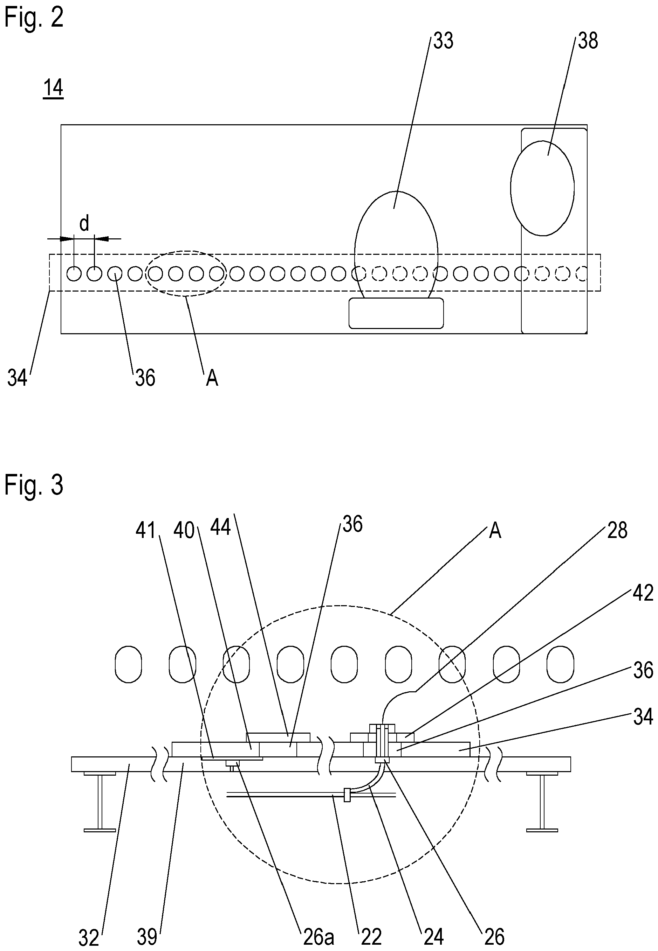

The interfaces 26 are of a of quick disconnect type and positioned in the cabin floor 32. Each interface 26 is in fluid connection with a potable water monument line 28 via a branch line 24. The monument lines 28 are in fluid connection with a consumer equipment 38 of a monument 14 such as a washbasin 38 or a toilet 33 (see Figure 2).

Preferably, the main line 22, branch lines 24 and the interfaces 26 are preassembled at fixed position in the fuselage and the cabin floor 32, respectively, whereas the monument lines 28 are installed afterwards regarding individual costumer's needs.

Preferably, the cabin locations 4, 6 which provides standard and binary monument positions only, the monuments 14 are connected to the main line 22 by a secondary distribution line 40, already installed as standard during assembly.

In figure 2, a monument 14 designed as a lavatory having a toilet 33 and a washbasin 38 is shown. In a longitudinal monument floor section 34 a plurality of openings 36 are provided. Here, the openings 36 have a circular shape, similar to through bores. The openings 36 are positioned in a row and spaced apart from each other in a defined distance d, preferably in a distance corresponding to an axial displacement of passenger seats 16. The openings 36 are adapted to establish a fluid connection to the consumer equipment 33, 38 via a monument line 28 which extends between an interface 26 and the consumer equipment 38 as shown in Figure 3. It can also connect a so-called buffer of a high-pressure water system, which is also a kind of consumer equipment.

As illustrated in Figure 3, in a longitudinal cabin floor section 39 for instance in the flex zone 8, several interfaces 26 are provided. The interfaces 26 are installed in such a manner that the cabin floor is gas tight to prevent smoke from underfloor area accessing the passenger cabin in case of a fire. In addition, the interfaces 26 are installed in a watertight manner to prevent water from the cabin to enter the underfloor area and to impair the function of electronic equipment or the like.

Preferably, in each floor panel one interfaces 26 is provided. The interfaces 26 are spaced apart from each other and, advantageously, also correspondence to an axial displacement of the passenger seats 16. The interfaces 26 are preinstalled and each interface 26 is in fluid connection with the main line 22 via one branch line 24. In order to avoid icing of the potable water, the interfaces 26 and the openings 36 in the monument floor section 34 are positioned in a warm cabin area.

The monument 14 is positioned on the cabin floor 32 in a way that at least one opening 36 in the monument floor section 34 is congruent with one interface 26. This means, when the monument 14 is installed in its desired position, at least one interface 26 is accessible via the opening 36 in the monument floor section 34. The monument floor 14 is also watertight. As a result, a monument line 28 can feed through the opening 36 and can be connected with the interface 26. Other interfaces 26 are covered by blind plugs 41 in order to protect them (physically and hygienically) and by monument floor areas 40 between the openings 36 and thus are not accessible. In order to create a flat cabin floor 32, the blind plugs 41 are lowered. These not accessible interfaces 26 are hidden under the monument floor. It should be noted that the connecting of the at least one needed potable interface 26 to the potable water main line 22 can be done before the monuments 14 are installed in the cabin.

A plug 42 with a sealed funnel will allow a waterproof lead-through of the monument line 28 from below the cabin floor 32 inside the monument 14. Unused openings 36 within the monument floor section 34 are closed by a plug 44.

In the following, a method for installing a potable water system 1 in an aircraft to feed potable water from a potable water tank 20 to a consumer equipment 38 of a monument 14 in the aircraft cabin 2 is described. The concept can also be used for monuments 14 such as galleys as well. Again, the water potable system 1 enables the connection of the monuments 14 to preinstalled aircraft potable water interfaces 26 by customized, standard or catalogue piping parts. All parts of the potable water distribution network such as the potable water main line 22 as well as the potable water branch lines 24, the potable water interfaces 26 and the potable water monument lines 28 are routed in warm fuselage areas in order to avoid icing of the potable water.

In a first step, the interfaces 26 are installed at defined cabin locations. In a monument floor section 34 openings 36 are provided which are adapted to establish a fluid connection to a consumer equipment 38 of the monument. After that, the monuments 14 are installed in the aircraft cabin 2. Then, the consumer equipment 38 is connected to the accessible potable water interface 26 via a potable water monument line 28 and the needed interfaces 26 are connected to the main line 22. Interfaces 26a which are not selected are decommissioned, as shown in Figure 3. The openings 36 that are not needed are closed by plugs 44. Here, two options are possible. Either the openings 36 are closed by plugs 44 from the beginning, so that the needed openings 36 has be opened. Or the openings 36 are opened form the beginning, so that the plugs 44 has be placed on those openings 36, which are not needed.

For the sake of completeness, it is stated that fastening means as well as coupling means such elbow joints, clips, brackets, sleeves and control means such valves which are needed for the installation of fluid networks comprising hoses and pipes are not illustrated. For instance, in order to avoid a large bending radius of the monument line 28, the monument line 28 can be divided up into several sections, wherein some of these sections are in fluid connecting via an elbow joint.

Disclosed is an Aircraft with a potable water system adapted to feed potable water from a potable water tank to a consumer equipment of a monument in the aircraft cabin, comprising several potable water interfaces, and at least one monument, wherein in the monument at least one opening is provided adapted to establish a fluid connection to the consumer equipment, wherein at least one potable water interface is accessible through the at least one opening, and an assembly method for installing a potable water system wherein standard parts of the potable water system are preinstalled and customized parts are installed later on.

## Claims

1. An Aircraft with a potable water system (1) adapted to feed potable water from a potable water tank (22) to a consumer equipment (38) of a monument (14) in the aircraft cabin (2), comprising
• several potable water interfaces (26, 26a), and
• at least one monument (14),
wherein the potable water interfaces (26, 26a) are provided in a
cabin floor section (39) or in a monument floor section (34)
and are in fluid connection with the potable water tank (22), wherein at least one opening (36) is provided in a monument floor section (34) or in a cabin floor section (39) and is adapted to establish a fluid connection to the consumer equipment (38), wherein
at least one potable water interface (26) is accessible through the at least one opening (36).

2. The aircraft according to claim 1, wherein each cabin floor panel in a monument cabin location of the aircraft cabin (2) is equipped with at least one potable water interface (26, 26a).

3. The aircraft according to claims 1 or 2, wherein the opening (36) has a circular shape.

4. The aircraft according to claims 1 or 2, wherein the opening (36) has an elongated shape.

5. The aircraft according to any of the preceding claims, wherein several openings (36) are provided.

6. The aircraft according to claim 5, wherein the potable water interfaces (26) as well as the openings (36) are provided in distance (d) to an adjacent potable water interface (26, 26a) and an adjacent opening (36), respectively, that correspondence to an axial displacement of passenger seats (16).

7. The aircraft according to claims 5 or 6, wherein the potable interfaces (26) are located in an axial row.

8. The aircraft according to any of the preceding claims, wherein not used openings (36) are closed by a plug.

9. The aircraft according to any of the preceding claims, wherein
• at least one potable water main line (22), and
• several potable water branch lines (24) are provided,
wherein the at least one potable water main line (22) and the potable water branch lines (24) are adapted to feed potable water stored in the potable water tank (20) to several potable water interfaces (26),
wherein at least one potable water main line (22) is routed in longitudinal direction from the potable water tank (20) and positioned in a warm area of the aircraft below the cabin floor (32), and
wherein the potable water branch lines (24) extend from the at least one potable water main line (22) to selected potable water interface (26).

10. A method for installing a potable water system in an aircraft to feed potable water from a potable water tank (20) to a consumer equipment (38) of a monument in the aircraft cabin (2), with the steps:
a. Installing the potable water interfaces (26, 26a) at defined locations in a cabin floor section (39),
b. Providing openings (36) in a monument floor section (34) adapted to establish a fluid connection to the consumer equipment (38) of the monument (14),
c. Installing the monuments (14) in the aircraft cabin (2);
d. Connecting the consumer equipment (38) to the accessible potable water interfaces (26) via a potable water monument line (28); and
e. Connecting needed potable water interfaces (26) to a water main line (22);
wherein step e) can be done before step c).
or,
a. Installing the potable water interfaces (26, 26a) at defined locations in a monument floor section (34),
b. Providing openings (36) in a cabin floor section (39) adapted to establish a fluid connection to the consumer equipment (38) of the monument (14),
c. Installing the monuments (14) in the aircraft cabin (2); and
d. Connecting the consumer equipment (38) to the accessible potable water interfaces (26) via a potable water monument line (28); and
e. Connecting needed potable water interfaces (26) to the water main line (22);
wherein step e) can be done before step c).
